# EUROPÄISCHE PATENTSCHRIFT

(11) **EP 2 851 601 B1**
(45) Veröffentlichungstag und Bekanntmachung des Hinweises auf die Patenterteilung: **20.01.2016**
(21) Anmeldenummer: 14185765.6
(22) Anmeldetag: 22.09.2014
(51) Int. Cl.: F16L 37/092, F16L 47/12

(54) **Anschlussvorrichtung für ein Kunststoffrohr**
Connecting device for a plastic pipe
Dispositif de raccordement pour un tuyau en plastique

(30) Priorität: 24.09.2013 AT 506122013
(43) Veröffentlichungstag der Anmeldung: 25.03.2015
(73) Patentinhaber: KE KELIT Kunststoffwerk Gesellschaft m.b.H., 4020 Linz (AT)
(72) Erfinder: Ratschmann, Elmar, 4202 Hellmonsödt (AT); Linzner, Werner, 4616 Weißkirchen (AT)
(74) Vertreter: Patentanwaltskanzlei Hübscher

(56) Entgegenhaltungen:
- EP-A1- 2 246 605
- EP-A1- 2 534 401

## Beschreibung

Die Erfindung bezieht sich auf eine Anschlussvorrichtung für ein Kunststoffrohr mit einem das Kunststoffrohr aufnehmenden Anschlussnippel, der einen sich gegen das freie Nippelende hin erweiternden Außenkonus bildet, zwischen dem und einem axialen Anschlag ein auf den Außenkonus aufschiebbarer Spreizring mit nach außen abstehenden Rückhaltekrallen vorgesehen ist, der am axialen Anschlag des Anschlussnippels abstützbar ist, und mit einer an einem Anschlagflansch des Anschlussnippels zugfest angreifenden, das auf den Anschlussnippel aufgeschobene Kunststoffrohr umschließenden Hülse.

Bei einer bekannten Anschlussvorrichtung dieser Art (AT 410 706 B) wird das Kunststoffrohr auf einen Anschlussnippel aufgeschoben, der im Bereich eines Außenkonus einen Spreizring mit nach außen abstehenden Rückhaltekrallen trägt, sodass beim Aufschieben das Kunststoffrohr über den sich im verjüngten Bereich des Außenkonus befindlichen Spreizring hinweggleitet. Beim Versuch, das Kunststoffrohr von Anschlussmittel abzuziehen, wird der Spreizring über seine abstehenden Rückhaltekrallen mitgenommen und auf den Außenkonus aufgeschoben. Die damit verbundene Spreizung des Spreizringes bedingt ein Festhalten des Kunststoffrohres, das von einer zugfest mit einem Anschlagflansch des Anschlussnippels verbundenen Hülse umschlossen wird, sodass das Kunststoffrohr dem gespreizten Spreizring nicht ausweichen kann und zwischen dem Spreizring und der als Widerlager wirkenden Hülse festgehalten wird. Um Dehnungen des Kunststoffrohres ausgleichen zu können, wird bevorzugt ein freier Verschiebeweg für den Spreizring vorgesehen. Da zum einfachen Aufschieben des Kunststoffrohres auf den Anschlussnippel der Spreizring mit seinen Rückhaltekrallen möglichst innerhalb des Außenumfanges des Anschlussnippels liegen soll, besteht die Gefahr, dass beim Abziehen des Kunststoffrohres vom Anschlussnippel der Spreizring nicht mitgenommen und folglich auch nicht auf den Außenkonus des Anschlussnippels aufgeschoben wird. Das Kunststoffrohr kann somit in einem solchen Fall nicht zwischen Spreizring und Hülse festgehalten werden. Zudem kann es vorkommen, dass die Rückhaltekrallen beim Aufschieben des Kunststoffrohres auf den Anschlussnippel beschädigt werden, und in weiterer Folge ihre Funktion nicht sicher wahren können.

Zudem wurde es bereits vorgeschlagen (AT 504 370 A1) den Spreizring über einen gummielastischen Stützring am axialen Anschlag des Anschlussnippels abzustützen. Diese Konstruktion weist allerdings hinsichtlich ihrer Funktionalität einige Nachteile auf. So ist nicht nur die Montage aufwendig, sondern besteht auch die Gefahr, dass der gummielastische Stützring beim Aufschieben des Kunststoffrohres auf den Anschlussnippel aus seiner Aufnahmenut in den Spalt zwischen Anschlußnippel und Hülse gezwängt und entlang des Anschlussnippels verschoben wird, was die Federfunktion des Stützringes beeinträchtigt, womit keine definierte Anpreßkraft für die gegen das Rohrinnere angestellten Rückhaltekrallen mehr gewährleistet ist.

Eine gattungsbildende Anschlussvorrichtung ist aus der EP 2 534 401 B1 bekannt.

Der Erfindung liegt somit die Aufgabe zugrunde, eine Anschlussvorrichtung der eingangs geschilderten Art so auszugestalten, dass ein verbessertes Festhalten des Kunststoffrohres zwischen dem Spreizring und der Hülse und eine gesicherte Anpresskraft für die Rückhaltekrallen gewährleistet werden kann.

Die Erfindung löst die gestellte Aufgabe dadurch, dass der Spreizring an seinem Außenumfang einen sich gegen den Anschlag hin erweiternden Außenkonus bildet, auf dem ein Haltekrallen tragender Haltering aus einer Aufnahmelage unter einer radialen nach außen Verlagerung der Haltekrallen in eine Haltelage verschiebbar ist, wobei Spreizring und Haltering in der Haltelage mit einer Rast verrastet sind.

Gemäß der Erfindung wird beim Aufschieben eines Rohres auf die Anschlussvorrichtung ein Haltering, der am Außenumfang des Spreizringes geführt ist, aus einer Aufnahmelage unter einer radialen nach Außenverlagerung der Haltekrallen in eine Haltelage verschoben. Der Spreizring stützt sich dabei an dem ihm zugeordneten Anschlag ab und bewirkt das Aufspreizen des Halteringes bzw. der Haltekrallen, die bei einem Verlagern des Halteringes aus der Aufnahmelage in die Haltelage in die Rohrinnenwandung eindringen und unmittelbar nach einem Verrasten von Spreizring und Haltering in der Haltelage das Rohr bereits an der Anschlussvorrichtung gesichert festhalten. Dazu dringen die Haltekrallen in den Rohrinnenmantel ein. Bei einem übermäßigen Innendruck bzw. bei einem Versuch, das Rohr von der Anschlussvorrichtung wieder abzuziehen, werden Haltering und Spreizring synchron in Richtung des freien Nippelendes verschoben und werden die dem Spreizring zugeordneten zusätzlich Rückhaltekrallen nach außen in die Rohrinnenwandung eingedrückt, womit die Sicherheit gegen ein Abziehen des Rohres erheblich erhöht wird.

Dadurch, dass die dem Spreizring zugeordneten Rückhaltekrallen nicht, wie im Stand der Technik üblich, unter Federvorspannung stehen müssen, um einen ordnungsgemäßen Halt des Rohres in der Anschlussvorrichtung zu gewährleisten, die Haltekrallen müssen ja stets bereits mit einer nicht unerheblichen Kraft gegen die Rohrinnenwandung angestellt werden, kann es zu keiner Beschädigung dieser Rückhaltekrallen beim Aufschieben des Rohres auf die Anschlussvorrichtung kommen. Die dem Spreizring zugeordneten Rückhaltekrallen kommen ja erst dann zu Einsatz bzw. werden erst dann in das Rohrinnere eingedrückt, wenn sich die Haltekrallen des Halterings in den Rohrinnenmantel eingegraben und das Rohr fixiert haben. Bis zum diesem Zeitpunkt sind die Rückhaltekrallen des Spreizrings noch nicht gegen die Rohrinnenwandung angestellt. Dies erfolgt erst bei einem versuchten Abziehen des Rohres von der Anschlussvorrichtung.

Vorteilhaft ist es, wenn die Haltekrallen von vom Haltering gegen das freie Nippelende vorragenden Federzungen aufweisen, die radial nach außen abragen. Diese Federzungen gleiten insbesondere am sich gegen den Anschlag hin erweiterten Außenkonus des Spreizringes und graben sich in der Haltelage in die Rohrinnenwandung. Durch die Kraftübersetzung mittels Konus kann die für ein Festlegen des Rohres an der Anschlussvorrichtung erforderliche Kraft, die zum Eindrücken der Haltekrallen in das Rohr aufgebracht werden muss, verhältnismäßig gering gehalten werden.

Eine einfache und sichere Art Haltering und Spreizring in der Haltelage miteinander zu sichern, besteht darin, dass die Rast vom Haltering gegen das freie Nippelende vorragende Ansätze umfasst, die in der Haltelage in vom Spreizring ausgebildete Rastabsätze eingreifen. Die Ansätze sind vorzugsweise wiederum federzungenartig ausgebildet und greifen beispielsweise in eine Ringnut, in Ringabsätze od. dgl. ein, womit ein gesicherter Halt des Halteringes in der Haltelage gewährleistet ist. Ein Zurückverschieben der Haltelage in die Aufnahmelage ist nicht mehr möglich, dies insbesondere, da der Spreizring bei einem Abzugsversuch des Rohres von der Anschlagvorrichtung der die Rückhaltekrallen in den Rohrinnenmantel eindrücken soll.

Um eine sichere Funktion der Vorrichtung zu gewährleisten und hierbei insbesondere ein gegeneinander Verdrehen vom Haltering und Spreizring zu vermeiden, empfiehlt es sich, wenn der Spreizring Führungen für die Ansätze ausbildet, welche Führungen eine freie Drehbarkeit zumindest in der Aufnahmelage unterbinden und zudem für kompakte Bauverhältnisse sorgen.

Zur Verringerung der Montagekräfte kann es von Vorteil sein, wenn die Haltekrallen wenigstens zwei Gruppen von Federzungen zugeordnet sind, die unterschiedliche Federzungenlängen aufweisen. Damit kann sichergestellt werden, dass nicht alle Haltekrallen gleichzeitig sondern nacheinander in das Rohrinnere eingepresst werden. Einfache Konstruktionsverhältnisse ergeben sich insbesondere, wenn der Haltering und/oder der Spreizring umfangsseitig offen, insbesondere geschlitzt, ausgebildet sind. Dadurch kann u. a. auch eine einfache Montage der Anschlussvorrichtung gewährleistet werden. Gleichermaßen können zur Verbesserung der Haltewirkung dem Spreizring mit nach außen abstehenden Rückhaltekrallen wenigstens zwei Gruppen von Federzungen zugeordnet sein, die unterschiedliche Federzungenlängen aufweisen. Damit kann ein zeitlich versetztes Eingraben der Rückhaltekrallen in die Rohrinnenwandung bei einem Abziehversuch bewirkt werden, was eine erhöhte Einpresskraft zur Folge hat. Die Rückhaltekrallen ragen dabei über die am Spreizring angesetzten oder von diesem ausgebildeten Federzungen gegen das freie Nippelende vor.

Zur Verlagerung des Halteringes aus seiner Aufnahmelage in seine Haltelage ist dem Haltering insbesondere ein Flanschansatz zugeordnet, der eine Anschlagfläche für das Kunststoffrohr ausbildet. Es könnte aber auch jede andere geeignete Mitnahmevorrichtung vorgesehen werden, die sicherstellt, dass der Halteansatz bei einem Einschieben eines Rohres in die Anschlussvorrichtung aus seiner Aufnahmelage in die Haltelage verschoben wird.

Um ein Beschädigen der Rückhaltekrallen bei der Montage, also beim Einschieben eines Rohres in die Anschlussvorrichtung sicher zu vermeiden, wird nach außen abstehenden Rückhaltekrallen gleich oder kleiner, dem Rohrnenndurchmesser ist.

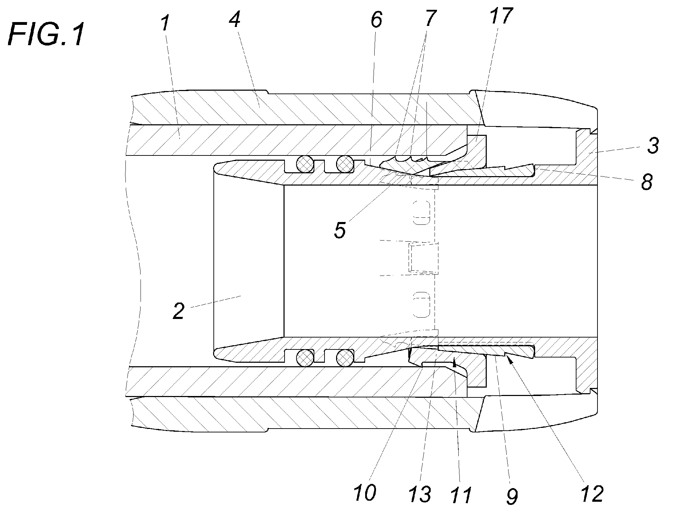

In der Zeichnung ist der Erfindungsgegenstand beispielsweise dargestellt. Es zeigen
- Fig. 1: , eine erfindungsgemäße Anschlussvorrichtung für ein Kunststoffrohr in einem vereinfachten Axialschnitt mit einem Haltering in Aufnahmelage,
- Fig. 2: die Vorrichtung aus Fig. 1 mit dem Haltering in Haltelage,

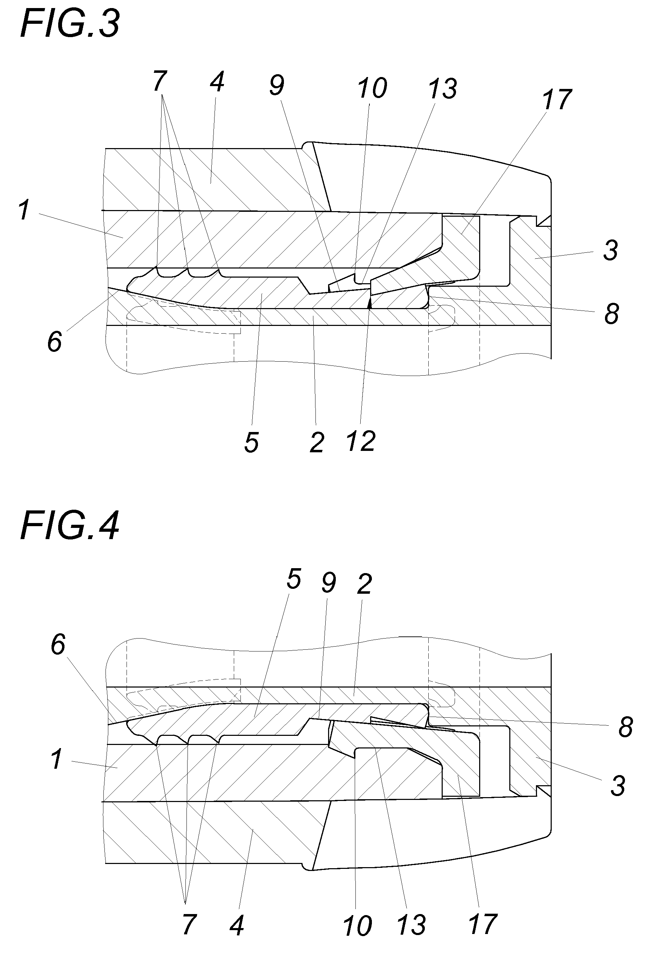

- Fig. 3: Detail im vergrößertem Maßstab aus Fig. 2,
- Fig. 4: Detail 4 aus Fig. 2 im vergrößerten Maßstab,

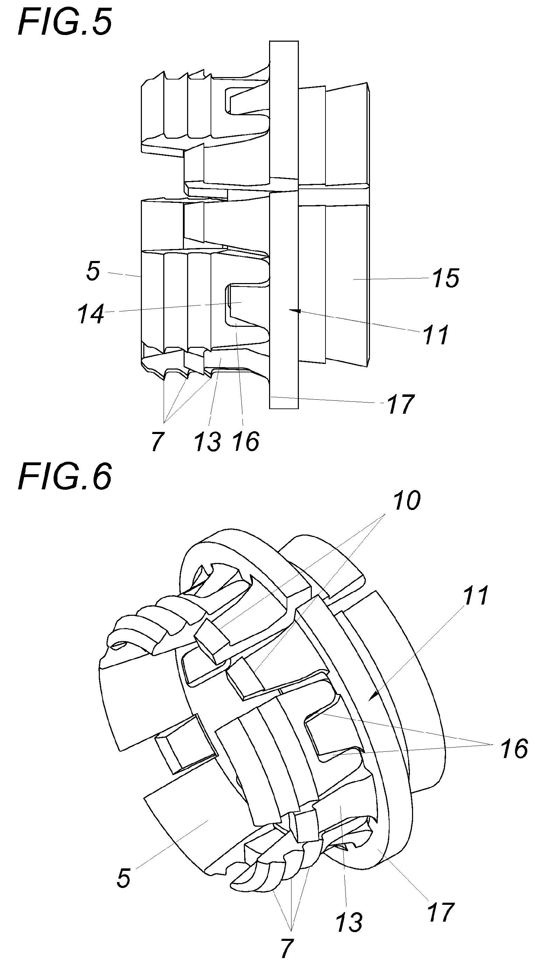

- Fig. 5: einen Spreizring mit aufgesetzten Haltering in Aufnahmelage in Ansicht,
- Fig. 6: Haltering und Spreizring aus Fig. 5 in Schrägansicht,

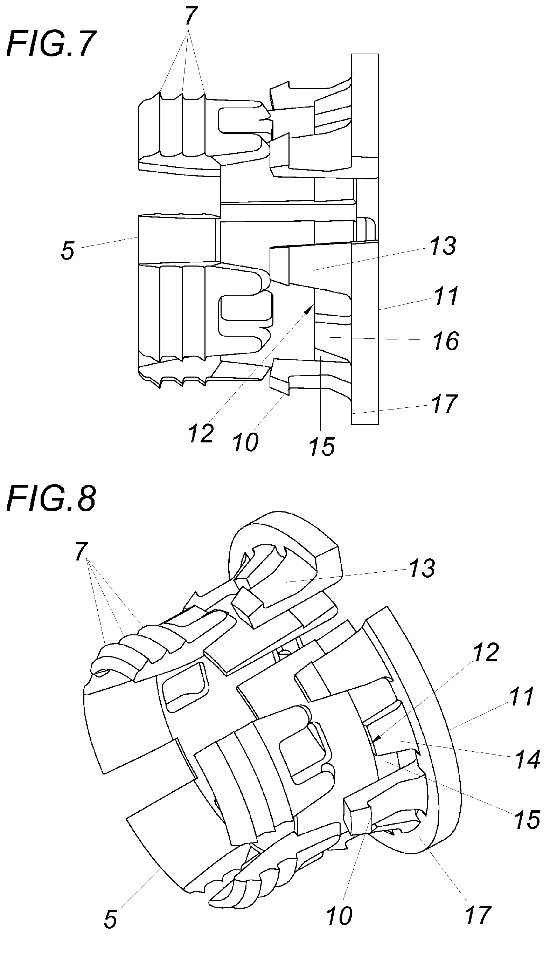

- Fig. 7: Haltering und Spreizring in Haltelage und in Ansicht,
- Fig. 8: Haltering und Spreizring aus Fig. 7 in Schrägansicht und

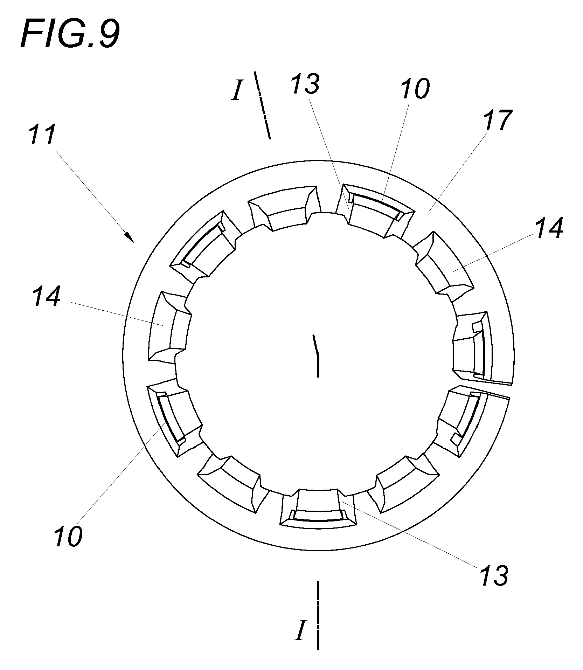

- Fig. 9: den Haltering in vergrößerter Vorderansicht.

Eine Anschlussvorrichtung für ein Kunststoffrohr 1 umfasst einen das Kunststoffrohr 1 aufnehmenden Anschlussnippel 2, einen Anschlagflansch 3, an dem eine das Kunststoffrohr 1 umschließende Hülse 4 zugfest angreift.

Um das Kunststoffrohr 1 zwischen dem Anschlussnippel 2 und der Hülse 4 festzuklemmen, ist auf dem Anschlussnippel 2 ein Spreizring 5 gelagert, der mit einem Außenkonus 6 des Anschlussnippels 2 zusammenwirkt. Der Spreizring 5 bildet dabei auf der dem Kunststoffrohr 1 zugewandten Außenseite radial vorschstehende Rückhaltekrallen 7 und stützt sich anderends an einem Anschlag 8 ab.

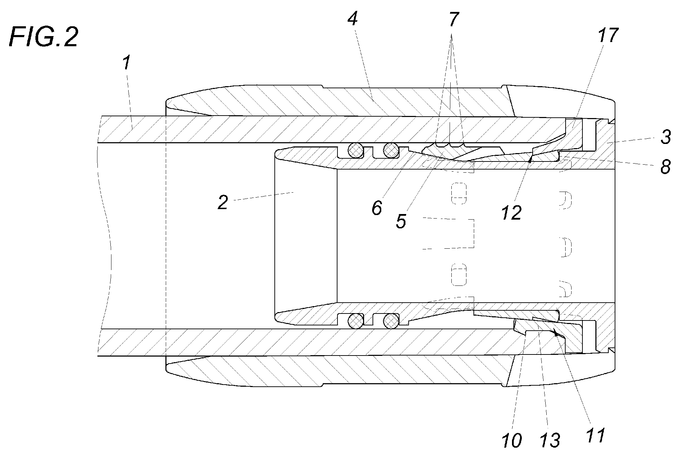

Erfindungsgemäß bildet der Spreizring 5 an seinen Außenumfang einen sich gegen den Anschlag hin erweiternden Außenkonus 9, auf dem ein Haltekrallen 10 tragender Haltering 11 aus seiner das Rohr 1 aufnehmenden Aufnahmelage unter einer radialen nach Außenverlagerung der Haltekrallen 10 in eine Haltelage (Fig. 2) verschiebbar ist, wobei der Spreizring 5 und der Haltering 11 in der Haltelage mit einer Rast 12 gegenseitig verrastet sind.

Die Haltekrallen 10 ragen von vom Haltering 11 gegen das freie Nippelende vorragenden Federzungen 13 radial nach außen ab, welche Federzungen 13 bei einem Verschieben des Halteringes 11 am Außenkonus des Spreizringes 5 die Haltekrallen 10 radial nach außen verlagern und in die Rohrinnenwandung des aufgeschobenen Rohres 1 eindrücken.

Die Rast 12 umfasst insbesondere vom Haltering 11 gegen das freie Nippelende vorragende Ansätze 14 die in der Haltelage in vom Spreizring 5 ausgebildete Rastabsätze 15 eingreifen.

Zudem bildet der Spreizring 5 Führungen 16 für die Ansätze 14 aus. Die Führungen 16 erlauben eine axiale Verschiebung des Halteringes 11 gegenüber dem Spreizring 5, unterbinden aber ein gegenseitiges Verdrehen um die Anschlussachse, zumindest in der Aufnahmelage. Haltering 11 und Spreizring 5 sind umfangseitig offen, also geschlitzt ausgebildet. Dies insbesondere, um bei einer stabilen Bauweise das erforderliche und gewünschte Einpressen der Haltekrallen 10 und der Rückhaltekrallen 7 in die Rohrinnenwandung sicher zu gewährleisten. Zudem weist der Haltering 11 einen Flanschansatz 17 auf, der eine Anschlagfläche für das Kunststoffrohr 1 ausbildet. Über diesen Flanschansatz 17 wird der Haltering aus seiner Aufnahmelage in seine Haltelage bei einem Einschieben des Rohres in die Anschlussvorrichtung verschoben.

## Patentansprüche

1. Anschlussvorrichtung für ein Kunststoffrohr (1) mit einem das Kunststoffrohr (1) aufnehmenden Anschlussnippel (2), der einen sich gegen das freie Nippelende hin erweiternden Außenkonus (6) bildet, zwischen dem und einem axialen Anschlag (8) ein auf den Außenkonus (6) aufschiebbarer Spreizring (5) mit nach außen abstehenden Rückhaltekrallen (7) vorgesehen ist, der am axialen Anschlag (8) des Anschlussnippels abstützbar ist, und mit einer an einem Anschlagflansch (3) des Anschlussnippels (2) zugfest angreifenden, das auf den Anschlussnippel (2) aufgeschobene Kunststoffrohr (1) umschließenden Hülse (4), **dadurch gekennzeichnet, dass** der Spreizring (5) an seinem Außenumfang einen sich gegen den Anschlag (8) hin erweiternden Außenkonus (9) bildet, auf dem ein Haltekrallen (10) tragender Haltering (11) aus einer Aufnahmelage unter einer radialen nach außen Verlagerung der Haltekrallen (10) in eine Haltelage verschiebbar ist, wobei Spreizring (5) und Haltering (11) in der Haltelage mit einer Rast (12) verrastet sind.

2. Anschlussvorrichtung nach Anspruch 1, **dadurch gekennzeichnet, dass** die Haltekrallen (10) von vom Haltering (11) gegen das freie Nippelende vorragenden Federzungen (13) radial nach außen abragen.

3. Anschlussvorrichtung nach Anspruch 1 oder 2, **dadurch gekennzeichnet, dass** die Rast (12) vom Haltering (11) gegen das freie Nippelende vorragende Ansätze (14) umfasst, die in der Haltelage in vom Spreizring (5) ausgebildete Rastabsätze (15) eingreifen.

4. Anschlussvorrichtung nach Anspruch 3, **dadurch gekennzeichnet, dass** der Spreizring (5) Führungen (16) für die Ansätze (14) ausbildet.

5. Anschlussvorrichtung nach einem der Ansprüche 2 bis 4, **dadurch gekennzeichnet, dass** die Haltekrallen (10) wenigstens zwei Gruppen von Federzungen (13) zugeordnet sind, die unterschiedliche Federzungenlängen aufweisen.

6. Anschlussvorrichtung nach einem der Ansprüche 2 bis 4, **dadurch gekennzeichnet, dass** die den vom Spreizring (5) mit nach außen abstehenden Rückhaltekrallen (7) wenigstens zwei Gruppen von Federzungen zugeordnet sind, die unterschiedliche Federzungenlängen aufweisen.

7. Anschlussvorrichtung nach einem der Ansprüche 1 bis 6, **dadurch gekennzeichnet, dass** der Haltering (11) und/oder der Spreizring (5) umfangsseitig offen, insbesondere geschlitzt, ausgebildet sind.

8. Anschlussvorrichtung nach einem der Ansprüche 1 bis 7, **dadurch gekennzeichnet, dass** der Haltering (11) einen Flanschansatz (17) aufweist, der eine Anschlagfläche für das Kunststoffrohr (1) ausbildet.

9. Anschlussvorrichtung nach einem der Ansprüche 1 bis 8, **dadurch gekennzeichnet, dass** der maximale Außendurchmesser der vom Spreizring (5) nach außen abstehenden Rückhaltekrallen (7) gleich oder kleiner dem Rohrnenndurchmesser ist.

## Claims

1. Connection device for a synthetic material pipe (1) having a connection nipple (2) receiving the synthetic material pipe (1) and forming an external cone (6) which widens towards the free nipple end, between which cone and an axial stop (8) a circlip (5), which can be pushed onto the external cone (6), is provided with outwardly protruding retaining claws (7), which circlip can be supported on the axial stop (8) of the connection nipple, and having a sleeve (4) which engages in a tight connection on a stop flange (3) of the connection nipple (2) and surrounds the synthetic material pipe (1) which has been pushed onto the connection nipple (2), **characterised in that**, on its outer circumference, the circlip (5) forms an external cone (9) which widens towards the stop (8), on which cone a holding ring (11) bearing holding claws (10) can be displaced out of a receiving position, through radial outwards displacement of the holding claws (10), into a holding position, wherein the circlip (5) and holding ring (11) are latched with a lug (12) in the holding position.

2. Connection device as claimed in claim 1, **characterised in that** the holding claws (10) protrude radially outwards from resilient tongues (13) projecting from the holding ring (11) towards the free nipple end.

3. Connection device as claimed in claim 1 or 2, **characterised in that** the lug (12) comprises projections (14) projecting from the holding ring (11) towards the free nipple end, which projections engage in the holding position in latching indentations (15) formed by the circlip (5).

4. Connection device as claimed in claim 3, **characterised in that** the circlip (5) forms guides (16) for the projections (14).

5. Connection device as claimed in any one of claims 2 to 4, **characterised in that** the holding claws (10) are allocated to at least two groups of resilient tongues (13) which have different resilient tongue lengths.

6. Connection device as claimed in any one of claims 2 to 4, **characterised in that** the retaining claws (7) protruding outwardly from the circlip (5) are allocated to at least two groups of resilient tongues which have different resilient tongue lengths.

7. Connection device as claimed in any one of claims 1 to 6, **characterised in that** the holding ring (11) and/or the circlip (5) are open, in particular split, at the circumference.

8. Connection device as claimed in any one of claims 1 to 7, **characterised in that** the holding ring (11) has a flange projection (17) which forms a stop surface for the synthetic material pipe (1).

9. Connection device as claimed in any one of claims 1 to 8, **characterised in that** the maximum outer diameter of the retaining claws (7) protruding outwardly from the circlip (5) is equal to or smaller than the pipe nominal diameter.

## Revendications

1. Dispositif de raccordement pour un tuyau en plastique (1), avec un raccord (2) recevant le tuyau en plastique (1) qui forme un cône extérieur (6) s'élargissant contre l'extrémité libre du raccord, entre lequel et une butée (8) axiale il est prévu un anneau d'écartement (5) enfilable sur le cône extérieur (6) avec des griffes de retenue (7) s'étendant vers l'extérieur, qui peut être soutenu au niveau de la butée (8) axiale du raccord, et avec une douille (4) entourant le tuyau en plastique (1) enfilé sur le raccord (2), venant en prise résistant à la traction au niveau d'une bride de butée (3) du raccord (2), **caractérisé en ce que** l'anneau d'écartement (5) forme sur sa périphérie extérieure un cône extérieur (9) s'élargissant contre la butée (8), sur lequel un anneau d'arrêt (11) portant des griffes de maintien (10) peut être déplacé à partir d'une position de réception sous un déplacement radial vers l'extérieur des griffes de maintien (10) dans une position d'arrêt, l'anneau d'écartement (5) et l'anneau d'arrêt (11) étant verrouillés dans la position d'arrêt avec un cran d'arrêt (12).

2. Dispositif de raccordement selon la revendication 1, **caractérisé en ce que** les griffes de maintien (10) font saillie, radialement vers l'extérieur, de languettes élastiques (13) dépassant de l'anneau d'arrêt (11) à l'opposé de l'extrémité libre du raccord.

3. Dispositif de raccordement selon la revendication 1 ou 2, **caractérisé en ce que** le cran d'arrêt (12) comprend des épaulements (14) faisant saillie de l'anneau d'arrêt (11) à l'opposé de l'extrémité libre du raccord, qui viennent en prise dans la position d'arrêt dans des épaulements du cran d'arrêt (15) réalisés par l'anneau d'écartement (5).

4. Dispositif de raccordement selon la revendication 3, **caractérisé en ce que** l'anneau d'écartement (5) forme des guidages (16) pour les épaulements (14).

5. Dispositif de raccordement selon l'une des revendications 2 à 4, **caractérisé en ce que** les griffes de maintien (10) sont associées au moins à deux groupes de languettes élastiques (13) qui présentent différentes longueurs de languettes élastiques.

6. Dispositif de raccordement selon l'une des revendications 2 à 4, **caractérisé en ce que** les griffes de retenue (7) s'étendant vers l'extérieur de l'anneau d'écartement (5) sont associées au moins à deux groupes de languettes élastiques, qui présentent différentes longueurs de languettes élastiques.

7. Dispositif de raccordement selon l'une des revendications 1 à 6, **caractérisé en ce que** l'anneau d'arrêt (11) et/ou l'anneau d'écartement (5) est/sont réalisé(s), côté périphérique, ouvert(s), en particulier fendu(s).

8. Dispositif de raccordement selon l'une des revendications 1 à 7, **caractérisé en ce que** l'anneau d'arrêt (11) présente un épaulement de bride (17) qui forme une surface de butée pour le tuyau en plastique (1).

9. Dispositif de raccordement selon l'une des revendications 1 à 8, **caractérisé en ce que** le diamètre extérieur maximal des griffes de retenue (7) s'étendant vers l'extérieur de l'anneau d'écartement (5) est inférieur ou égal au diamètre intérieur du tuyau.
